# EUROPÄISCHE PATENTSCHRIFT

(11) **EP 3 268 634 B1**
(45) Veröffentlichungstag und Bekanntmachung des Hinweises auf die Patenterteilung: **08.01.2020**
(21) Anmeldenummer: 16703720.9
(22) Anmeldetag: 09.02.2016
(51) Int. Cl.: F16H 57/029, F16H 1/28, F16J 15/447, F16H 57/04

(54) **GETRIEBE MIT EINER PLANETENGETRIEBESTUFE**
TRANSMISSION HAVING A PLANETARY GEAR STAGE
BOÎTE DE VITESSES POURVUE D'UN ÉTAGE À TRAINS ÉPICYCLOÏDAUX

(30) Priorität: 11.03.2015 DE 102015003047
(43) Veröffentlichungstag der Anmeldung: 17.01.2018
(73) Patentinhaber: SEW-EURODRIVE GmbH & Co. KG, 76646 Bruchsal (DE)
(72) Erfinder: HÜTTINGER, Alexander, 75245 Neulingen (DE)
(86) Internationale Anmeldenummer: PCT/EP2016/000218
(87) Internationale Veröffentlichungsnummer: WO 2016/142027

(56) Entgegenhaltungen:
- EP-A1- 2 119 941
- EP-A2- 1 744 070
- DE-A1-102004 054 045
- DE-A1-102013 012 916

## Beschreibung

Die Erfindung betrifft ein Getriebe mit einer Planetengetriebestufe.
Es ist allgemein bekannt, dass ein Getriebe mit einer Planetengetriebestufe ausführbar ist.

Aus der DE 10 2004 054 045 A1 ist als nächstliegender Stand der Technik ein Getriebebaukasten bekannt.
Aus der EP 1 744 070 A2 ist ein Axiallager bekannt.

Aus der DE 10 2013 012916 A1 ist eine Dichtungsanordnung für die Abdichtung einer Welle bei einem Getriebe bekannt.
Aus der EP 2 119 941 A1 ist eine Getriebeanordnung bekannt.

Der Erfindung liegt daher die Aufgabe zugrunde, eine Fettschmierung auszuführen.
Erfindungsgemäß wird die Aufgabe bei dem Getriebe nach den in Anspruch 1 angegebenen Merkmalen gelöst.

Erfindungsgemäß weist das Getriebe eine Planetengetriebestufe auf mit den Merkmalen des Anspruchs 1.

Von Vorteil ist dabei, dass eine Fettschmierung realisierbar ist. Denn die Labyrinthdichtung ist in der Lage, das Schmierfett im Beriech des Zahneingriffs zu halten. Somit ist die Schmierung im Beriech des Zahneingriffs gesichert. Außerdem ist möglichst wenig Schmierfett im Getriebe einsetzbar und somit die Wärmeableitung nicht verschlechtert. Denn Schmierfett ist ein schlechter Wärmeleiter.
Die Labyrinthdichtung verhindert also ein Absacken des Schmierfettes, also einen Abtransport aus dem Beriech des Zahneingriffs.

Weitere Ausgestaltungen des Erfindungsgemässen Getriebes enthalten die Unteransprüche 2-12.

Die Erfindung wird nun anhand von Abbildungen näher erläutert:
In der Figur 1 ist ein Querschnitt durch einen Ausschnitt im eintreibenden Bereich einer Planetengetriebestufe eines erfindungsgemäßen Planetengetriebes gezeigt, bei dem eine Labyrinthscheibe 4 einer Labyrinthdichtung mit dem Planetenträger 8 drehfest verbunden ist.

In der Figur 2 ist der Querschnitt durch ein anderes Ausführungsbeispiel gezeigt, bei dem die Labyrinthscheibe 4 mit dem Planetenträger 8 drehfest verbunden ist.

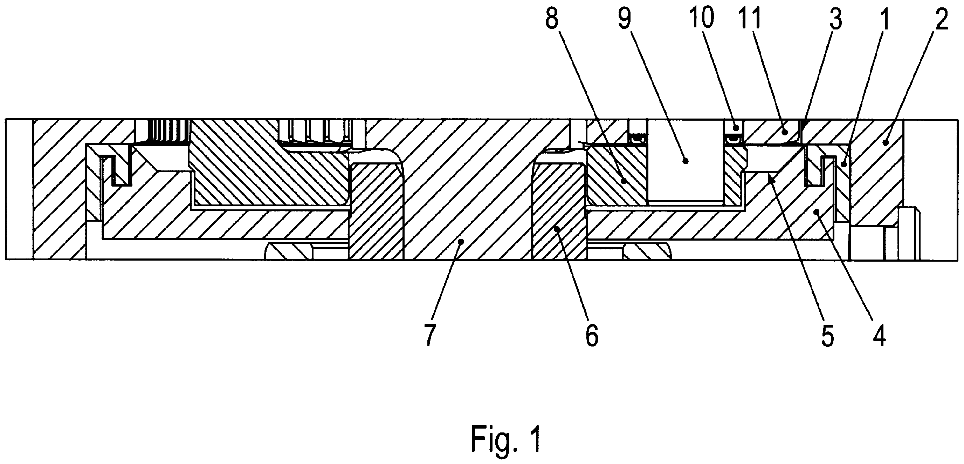

Wie in Figur 1 gezeigt, ist an der Planetengetriebestufe eintriebsseitig eine Labyrinthdichtung angeordnet, die somit Schmierfett im Beriech dieser Planetengetriebestufe hält.

Somit ist ein sparsamer Schmiermitteleinsatz bei gleichzeitig effektiver Schmierung des Eingriffsbereichs ermöglicht.

Hierbei ist die eintreibende Welle 6 pressverbunden mit dem Sonnenrad 7 der Planetengetriebestufe. Die auf Bolzen 9 über Lager 10, insbesondere Nadellager, gelagerten Planetenräder 11 stehen einerseits mit dem Sonnenrad 7 und andererseits mit einer Hohlradverzahnung im Eingriff, wobei die Hohlradverzahnung am Gehäuseteil 2 vorgesehen ist oder alternativ an einem Hohlrad, welches mit dem Gehäuseteil 2 verbunden ist.

Die Planetengetriebestufe ist mittels Schmierfett geschmiert. Schmieröl muss daher nicht vorhanden sein.

Die Bolzen 9 sind in Bohrungen eines Planetenträgers 8 eingepresst. Der Planetenträger 8 bildet somit die abtreibende Welle der Planetengetriebestufe, die entweder im Gehäuse des Getriebes gelagert und aus diesem Gehäuse herausgeführt ist, also als abtreibende Welle fungiert, oder als eintreibende Welle einer nachgeschalteten Getriebestufe fungiert.

Im Eingriffsbereich 3 der Verzahnung des jeweiligen Planetenrads 11 mit der Hohlradverzahnung befindet sich also Schmierfett. Um dieses Schmierfett dort auch zu halten, ist die Labyrinth-Dichtung vorgesehen.

Hierzu ist eine Labyrinth-Scheibe 4 mit der eintreibenden Welle 6 drehfest verbunden. Die Labyrinthscheibe weist an ihrer axial gerichteten Stirnseite zumindest eine Ringnut auf, in welche eine Erhebung eines Labyrinth-Statorteils 1 hineinragt. Ebenso ragt die Nutwand der Ringnut in eine am Labyrinth-Statorteil 1 eingearbeitete Ringnut.

Die Ringachsen beider Ringnuten sind axial ausgerichtet, entsprechen also der Achse der eintreibenden Welle 6.

Die Labyrinth-Scheibe 4 weist eine Förderschräge 5 auf, die derart gestaltet ist, dass sie mit zunehmendem Radialabstand einen abnehmenden Axialabstand zum Planeten 11 beziehungswiese zum Eingriffsbereich zwischen dem Planten 11 und dem Hohlrad aufweist. Somit wird bei Drehbewegung der eintreibenden Welle 6 zur Labyrinthscheibe 4 vorgedrungenes Schmierfett in den Eingriffsbereich 3 gefördert, insbesondere geschleudert. Dabei weist der in axialer Richtung höchste Oberflächenbereich der Labyrinthscheibe 4 vorzugsweise den geringsten axialen Abstand zum Planeten 11 oder zum Eingriffsbereich 3 auf. Auf diese Weise wird das geförderte Schmierfett in den Eingriffsbereich 3 gepresst. Diese Förderwirkung ist sogar entgegen der Schwerkraft bewirkbar, wenn die Drehzahl der eintreibenden Welle 6 einen Mindestwert überschreitet. In diesem Fall ist also die Labyrinthscheibe 4 unterhalb der Planetenräder 11 angeordnet.

Die Verbindung zwischen der Labyrinthscheibe 4 und der eintreibenden Welle 6 ist dicht ausgeführt. Hierbei ist also entweder eine Pressverbindung verwendet oder im Bereich der Verbindung ist Klebstoff oder eine Dichtung eingebracht.

Der Labyrinthspalt ist derart eng, dass auch bei ruhendem Getriebe anstehendes Schmierfett durch die Labyrinthdichtung nicht hindurchtreten kann.

Bei einem weiteren erfindungsgemäßen Ausführungsbeispiel ist die eintreibende Welle als abtreibende Welle eines vorgelagerten Getriebestufe ausgeführt. Vorzugsweise ist diese Getriebestufe eine Planetengetriebestufe und die eintreibende Welle 6 der Planetenträger dieser vorgeschalteten Stufe. Somit ist das Schmierfett der vorgelagerten Stufe separat gehalten von dem Schmierfett der in Figur 1 gezeigten Stufe.

Bei einem weiteren erfindungsgemäßen Ausführungsbeispiel sind Labyrinth-Statorteil 1 und Gehäuseteil 2 einstückig, also einteilig, ausgeführt.

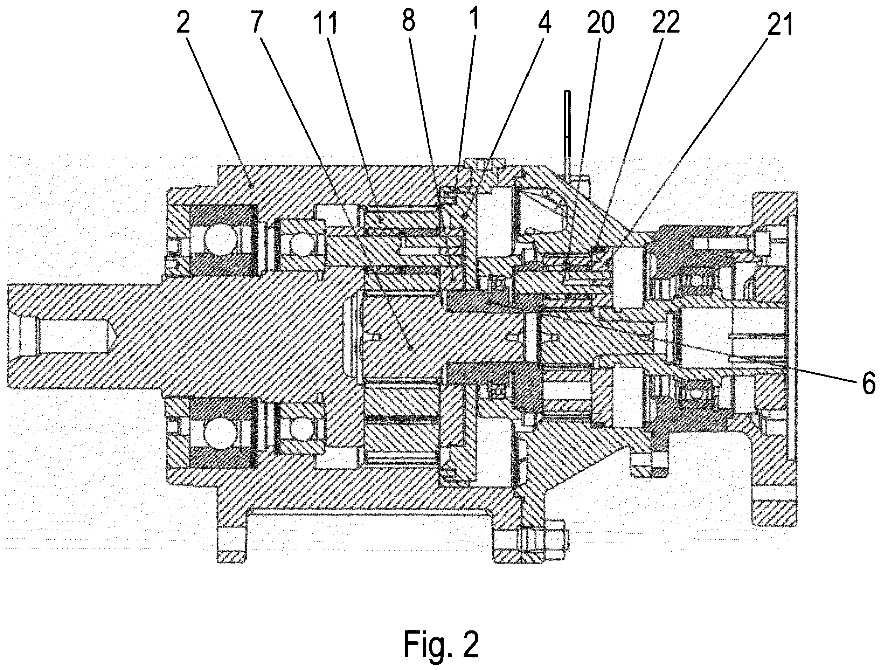

Wie in Figur 2 gezeigt, ist im Unterschied zur Figur 1 die Labyrinthscheibe 4 auf dem Planetenträger 8 angeordnet und mit diesem drehfest verbunden. Somit ist die Drehzahl im Unterschied zur Figur 1 geringer und die Reibungsverluste daher ebenso.

Wie in Figur 2 gezeigt, ist auch in der vorgelagerten Getriebestufe eine Labyrinthdichtung angeordnet. Diese Labyrinthdichtung ist am axialen, von der Labyrinthscheibe 4 abgewandten axialen Endbereich der vorgelagerten Getriebestufe angeordnet und verhindert somit das Austreten von Schmierfett zum antreibenden Elektromotor hin. Die Rotorwelle des Elektromotors ist drehfest mit dem Sonnenrad der vorgelagerten Getriebestufe verbunden und treibt diese somit an. Wiederum stehen die Planetenräder 20 mit dem Sonnenrad und einem Hohlrad im Eingriff. Die Planetenräder 20 sind wiederum über Lager auf Planetenbolzen gelagert und diese in Bohrungen eines Planetenträgers eingepresst, der drehfest mit der Labyrinthscheibe 21 verbunden ist. Diese wirkt zusammen mit dem Labyrinth-Statorteil 22, wobei wiederum die Labyrinthscheibe 21 eine Ringnut aufweist, in welche eine Erhöhung des Labyrinth-Statorteils 22 hineinragt und ebenso eine Nutwand der Ringnut der Labyrinthscheibe in eine Ringnut des Labyrinth-Statorteils 22 hineinragt. Die Ringachsen entsprechen dabei wiederum der Achse der eintreibenden Welle. Der Spalt zwischen Labyrinth-Statorteil 22 und Labyrinthscheibe 21 ist derart klein, dass anstehendes Schmierfett nicht hindurchtritt.

Die Labyrinthscheibe 21 weist wiederum eine Förderschräge auf, die anstehendes Schmierfett in den Eingriffsbereich zwischen den Planetenrädern 20 und der Innenverzahnung des Hohlrades fördert.

Auf diese Weise ist also der Verzahnungsbereich zwischen Hohlrad und Planetenrädern (20, 11) mit Schmierfett auch dann versorgt, wenn die Abtriebswelle nach oben ausgerichtet ist, also der antreibenden Motor unterhalb des Getriebes angeordnet ist.

Dadurch bleiben die Planetenräder (20, 11) geschmiert und somit auch der Eingriffsbereich zwischen jeweiliger Sonne und Planetenrädern (20, 11). Außerdem dringt das Schmierfett nicht von einer Stufe in eine vorgelagerte Stufe oder in den antreibenden Motor.

Die Labyrinthdichtung ist hierzu jeweils am dem antreibenden Motor zugewandten axialen Endbereich der jeweiligen Stufe angeordnet.

### Bezugszeichenliste

1 Labyrinth-Statorteil
2 Gehäuseteil
3 Eingriffsbereich der Verzahnung des Planeten 11 mit der Hohlradverzahnung
4 Labyrinthscheibe
5 Förderschräge
6 eintreibende Welle, insbesondere Planetenträger einer vorgeschalteten Stufe
7 Sonnenrad
8 Planetenträger
9 Bolzen
10 Lager, insbesondere Nadellager
11 Planetenrad
20 Planetenrad
21 Labyrinthscheibe
22 Labyrinth-Statorteil

## Patentansprüche

1. Getriebe mit einer Planetengetriebestufe, die ein Gehäuseteil (2) und ein drehbar gelagertes Teil aufweist,
wobei die Planetengetriebestufe eine Labyrinthdichtung aufweist, die eine Labyrinthscheibe (4, 21) und ein mit der Labyrinthdichtung zusammenwirkendes Labyrinth-Statorteil (1, 22) aufweist,
wobei die Labyrinthscheibe (4, 21) mit dem Teil drehfest verbunden ist,
wobei das Labyrinth-Statorteil (1, 22) mit dem Gehäuseteil (2) verbunden ist, **dadurch gekennzeichnet, dass** die Labyrinthscheibe (4, 21) eine Ringnut aufweist, in welche eine Erhebung des Labyrinth-Statorteils (1, 22) hineinragt,
das Labyrinth-Statorteil (1, 22) eine Ringnut aufweist, in welche eine Erhebung der Labyrinthscheibe (4, 21) hineinragt,
das Teil ein Sonnenrad (7) ist, wobei die Verzahnung des Sonnenrads (7) im Eingriff steht mit der Verzahnung eines Planetenrades (7), die auf ihrer vom Sonnenrad abgewandten Seite mit einer Hohlradverzahnung im Eingriff steht,
wobei die Labyrinthscheibe (4, 21) eine Förderschräge (5) aufweist, indem mit zunehmendem Radialabstand zur Achse des Sonnenrades (7) der axiale Abstand zum Planetenrad (11, 20) oder zur Hohlradverzahnung abnimmt.

2. Getriebe nach Anspruch 1,
**dadurch gekennzeichnet, dass**
die eintreibende Welle (6) der Planetengetriebestufe mit einer Sonnenradverzahnung ausgeführt ist oder mit einem Sonnenrad (7) verbindbar ist.

3. Getriebe nach mindestens einem der vorangegangenen Ansprüche,
**dadurch gekennzeichnet, dass**
die Verzahnung des Sonnenrads (7) im Eingriff steht mit der Verzahnung von Planetenrädern (11, 20), die auf ihrer vom Sonnenrad (7) abgewandten mit einer Hohlradverzahnung im Eingriff steht.

4. Getriebe nach mindestens einem der vorangegangenen Ansprüche,
**dadurch gekennzeichnet, dass**
die Planetenräder (11, 20) mittels Lagern (10), auf Bolzen (9) gelagert sind, die in Ausnehmungen des Planetenträgers (8) eingepresst sind.

5. Getriebe nach mindestens einem der vorangegangenen Ansprüche,
**dadurch gekennzeichnet, dass**
die Förderschräge (5) dem Oberflächenabschnitt eines Kegels entspricht und/oder auf der den Planetenrädern (11, 20) zugewandten Seite der Labyrinthscheibe (4, 21) angeordnet ist und/oder wobei der von der Förderschräge (5) überdeckte Radialabstandsbereich mit dem von der Verzahnung der Planetenräder (11, 20), von der Verzahnung des Hohlrades und/oder vom Eingriffsbereich der Verzahnung der Planetenräder (11, 20) und der Verzahnung des Hohlrades überdeckten Radialabstandsbereich überlappt oder ihn umfasst oder von ihm umfasst ist.

6. Getriebe nach mindestens einem der vorangegangenen Ansprüche,
**dadurch gekennzeichnet, dass**
das Getriebe oder die Planetengetriebestufe zumindest teilweise mit Schmierfett gefüllt ist.

7. Getriebe nach mindestens einem der vorangegangenen Ansprüche,
**dadurch gekennzeichnet, dass**
diese vorgelagerte Getriebestufe als Planetengetriebestufe ausgeführt ist.

8. Getriebe nach mindestens einem der vorangegangenen Ansprüche,
**dadurch gekennzeichnet, dass**
in einer vorgelagerten Getriebestufe eine weitere Labyrinthdichtung angeordnet ist.

9. Getriebe nach mindestens einem der vorangegangenen Ansprüche,
**dadurch gekennzeichnet, dass**
die weitere Labyrinthdichtung eine weitere Labyrinthscheibe (4, 21) und einen weiteren Labyrinth-Statorteil (1, 22) aufweist, wobei die weitere Labyrinthscheibe (4, 21) mit dem Planetenträger (8) der vorgelagerten Stufe drehfest verbunden ist,
wobei die weitere Labyrinthdichtung das Schmierfett des Getriebes vom antreibenden Elektromotor beabstandet hält.

10. Getriebe nach mindestens einem der vorangegangenen Ansprüche,
**dadurch gekennzeichnet, dass**
die weitere Labyrinthdichtung auf der axial von der ersten Planetengetriebestufe und/oder von der Abtriebsseite der vorgelagerten Planetengetriebestufe abgewandten Seite angeordnet ist.

11. Getriebe nach mindestens einem der vorangegangenen Ansprüche,
**dadurch gekennzeichnet, dass**
die Förderschräge (5) dem Oberflächenabschnitt eines Kegels entspricht und/oder auf der den Planetenrädern (11, 20) zugewandten Seite der Labyrinthscheibe (4, 21) angeordnet ist und/oder wobei der von der Förderschräge (5) überdeckte Radialabstandsbereich mit dem von der Verzahnung der Planetenräder (11, 20), von der Verzahnung des Hohlrades und/oder vom Eingriffsbereich der Verzahnung der Planetenräder (11, 20) und der Verzahnung des Hohlrades überdeckten Radialabstandsbereich überlappt oder ihn umfasst oder von ihm umfasst ist.

12. Getriebe nach mindestens einem der vorangegangenen Ansprüche,
**dadurch gekennzeichnet, dass**
die vorgelagerte Planetengetriebestufe zumindest teilweise mit Schmierfett gefüllt ist.

## Claims

1. Gearing comprising an epicyclic gearing stage having a housing part (2) and a rotatably mounted component,
the epicyclic gearing stage having a labyrinth seal that has a labyrinth disc (4, 21) and a labyrinth stator part (1, 22) interacting with the labyrinth seal,
the labyrinth disc (4, 21) being connected to the component for conjoint rotation,
the labyrinth stator part (1, 22) being connected to the housing part (2),
**characterised in that**
the labyrinth disc (4, 21) has an annular groove into which a projection on the labyrinth stator part (1, 22) protrudes,
the labyrinth stator part (1, 22) has an annular groove into which a projection on the labyrinth disc (4, 21) protrudes,
the component is a sun gear (7), the teeth of the sun gear (7) meshing with the teeth of a planet gear (7), said planet gear teeth meshing with ring gear teeth on their side facing away from the sun gear,
the labyrinth disc (4, 21) having a conveying chamfer (5) since the axial distance to the planet gear (11, 20) or the ring gear teeth decreases as the radial distance to the axis of the sun gear (7) increases.

2. Gearing according to claim 1,
**characterised in that**
the input shaft (6) of the epicyclic gearing stage is configured to have sun gear teeth or can be connected to a sun gear (7).

3. Gearing according to at least one of the preceding claims,
**characterised in that**
the teeth of the sun gear (7) mesh with the teeth of planet gears (11, 20), said planet gear teeth meshing with ring gear teeth on their [side] facing away from the sun gear (7).

4. Gearing according to at least one of the preceding claims,
**characterised in that**
the planet gears (11, 20) are mounted on bolts (9) by means of bearings (10), said bolts being pressed into recesses in the planet carrier (8).

5. Gearing according to at least one of the preceding claims,
**characterised in that**
the conveying chamfer (5) corresponds to the surface portion of a wedge and/or is arranged on the side of the labyrinth disc (4, 21) facing the planet gears (11, 20) and/or the radial gap region covered by the conveying chamfer (5) overlapping, encompassing or being encompassed by the radial gap region covered by the teeth of the planet gears (11, 20), the teeth of the ring gear and/or the meshing region of the teeth of the planet gears (11, 20) and the teeth of the ring gear.

6. Gearing according to at least one of the preceding claims,
**characterised in that**
the gearing or the epicyclic gearing stage is at least partly filled with lubricating grease.

7. Gearing according to at least one of the preceding claims,
**characterised in that**
said upstream gearing stage is configured as an epicyclic gearing stage.

8. Gearing according to at least one of the preceding claims
**characterised in that**
an additional labyrinth seal is arranged in an upstream gearing stage.

9. Gearing according to at least one of the preceding claims,
**characterised in that**
the additional labyrinth seal has an additional labyrinth disc (4, 21) and an additional labyrinth stator part (1, 22), the additional labyrinth disc (4, 21) being connected to the planet carrier (8) of the upstream stage for conjoint rotation,
the additional labyrinth seal keeping the lubricating grease of the gearing at a distance from the driving electric motor.

10. Gearing according to at least one of the preceding claims,
**characterised in that**
the additional labyrinth seal is arranged on the side facing away from the first epicyclic gearing stage and/or the output side of the upstream epicyclic gearing stage.

11. Gearing according to at least one of the preceding claims,
**characterised in that**
the conveying chamfer (5) corresponds to the surface portion of a wedge and/or is arranged on the side of the labyrinth disc (4, 21) facing the planet gears (11, 20) and/or the radial gap region covered by the conveying chamfer (5) overlapping, encompassing or being encompassed by the radial gap region covered by the teeth of the planet gears (11, 20), the teeth of the ring gear and/or the meshing region of the teeth of the planet gears (11, 20) and the teeth of the ring gear.

12. Gearing according to at least one of the preceding claims,
**characterised in that**
the upstream epicyclic gearing stage is at least partly filled with lubricating grease.

## Revendications

1. Transmission munie d'un étage à engrenage planétaire, comprenant une partie de carter (2) et une partie montée rotative,
ledit étage à engrenage planétaire comportant une garniture d'étanchement à labyrinthe pourvue d'un disque (4, 21) à labyrinthe, et une partie statorique (1, 22) à labyrinthe qui coopère avec ladite garniture d'étanchement à labyrinthe,
ledit disque (4, 21) à labyrinthe étant verrouillé en rotation avec ladite partie,
la partie statorique (1, 22) à labyrinthe étant reliée à la partie de carter (2),
**caractérisée par le fait que**
le disque (4, 21) à labyrinthe comporte une rainure annulaire dans laquelle pénètre une protubérance de la partie statorique (1, 22) à labyrinthe,
laquelle partie statorique (1, 22) à labyrinthe comporte une rainure annulaire dans laquelle pénètre une protubérance dudit disque (4, 21) à labyrinthe,
la partie étant une roue planétaire (7), la denture de ladite roue planétaire (7) engrenant dans la denture d'un pignon satellite (11, 20) qui est en prise avec une denture de couronne dentée, sur son côté pointant à l'opposé de ladite roue planétaire,
ledit disque (4, 21) à labyrinthe étant pourvu d'un biseau de refoulement (5), sachant que la distance axiale, par rapport audit pignon satellite (11, 20) ou à ladite denture de couronne dentée, décroît au fur et à mesure de l'accroissement de la distance radiale vis-à-vis de l'axe de ladite roue planétaire (7).

2. Transmission selon la revendication 1,
**caractérisée par le fait que**
l'arbre menant (6) de l'étage à engrenage planétaire est muni d'une denture de roue planétaire, ou peut être relié à une roue planétaire (7).

3. Transmission selon au moins l'une des revendications précédentes,
**caractérisée par le fait que**
la denture de la roue planétaire (7) est en prise avec la denture de pignons satellites (11, 20), qui engrène dans une denture de couronne dentée sur son côté pointant à l'opposé de ladite roue planétaire (7).

4. Transmission selon au moins l'une des revendications précédentes,
**caractérisée par le fait que**
les pignons satellites (11, 20) sont montés, au moyen de paliers (10), sur des chevilles (9) insérées à force dans des évidements du porte-satellites (8).

5. Transmission selon au moins l'une des revendications précédentes,
**caractérisée par le fait que**
le biseau de refoulement (5) correspond à la région de la surface d'un cône, et/ou est disposé sur le côté du disque (4, 21) à labyrinthe qui est tourné vers les pignons satellites (11, 20), et/ou sachant que la plage de distances radiales, couverte par ledit biseau de refoulement (5), est en chevauchement avec la plage de distances radiales couverte par la denture desdits pignons satellites (11, 20), par la denture de la couronne dentée et/ou par la zone de venue en prise de la denture desdits pignons satellites (11, 20) et de la denture de ladite couronne dentée, ou bien inclut ladite plage, voire est incluse dans cette dernière.

6. Transmission selon au moins l'une des revendications précédentes,
**caractérisée par le fait que**
ladite transmission, ou l'étage à engrenage planétaire, est au moins partiellement empli(e) de graisse lubrifiante.

7. Transmission selon au moins l'une des revendications précédentes,
**caractérisée par le fait que**
cet étage de transmission, implanté en amont, est réalisé sous la forme d'un étage à engrenage planétaire.

8. Transmission selon au moins l'une des revendications précédentes,
**caractérisée par le fait**
**qu'**une garniture d'étanchement additionnelle à labyrinthe est intégrée dans un étage de transmission implanté en amont.

9. Transmission selon au moins l'une des revendications précédentes,
**caractérisée par le fait que**
la garniture d'étanchement additionnelle à labyrinthe est dotée d'un disque additionnel (4, 21) à labyrinthe et d'une partie statorique additionnelle (1, 22) à labyrinthe, ledit disque additionnel (4, 21) à labyrinthe étant verrouillé en rotation avec le porte-satellites (8) de l'étage implanté en amont,
sachant que ladite garniture d'étanchement additionnelle à labyrinthe maintient la graisse lubrifiante de la transmission à distance du moteur électrique assurant l'entraînement.

10. Transmission selon au moins l'une des revendications précédentes,
**caractérisée par le fait que**
la garniture d'étanchement additionnelle à labyrinthe est disposée du côté pointant axialement à l'opposé du premier étage à engrenage planétaire, et/ou à l'opposé du côté mené de l'étage à engrenage planétaire implanté en amont.

11. Transmission selon au moins l'une des revendications précédentes,
**caractérisée par le fait que**
le biseau de refoulement (5) correspond à la région de la surface d'un cône, et/ou est disposé sur le côté du disque (4, 21) à labyrinthe qui est tourné vers les pignons satellites (11, 20), et/ou sachant que la plage de distances radiales, couverte par ledit biseau de refoulement (5), est en chevauchement avec la plage de distances radiales couverte par la denture desdits pignons satellites (11, 20), par la denture de la couronne dentée et/ou par la zone de venue en prise de la denture desdits pignons satellites (11, 20) et de la denture de ladite couronne dentée, ou bien inclut ladite plage, voire est incluse dans cette dernière.

12. Transmission selon au moins l'une des revendications précédentes,
**caractérisée par le fait que**
l'étage à engrenage planétaire, implanté en amont, est au moins partiellement empli de graisse lubrifiante.
